# EUROPEAN PATENT SPECIFICATION

(11) **EP 2 381 151 B1**
(45) Date of publication and mention of the grant of the patent: **27.03.2013**
(21) Application number: 10196112.6
(22) Date of filing: 21.12.2010
(51) Int. Cl.: F16L 5/08, H02G 3/22, H02G 9/02, H02G 15/013

(54) **Deformable tubular seal member**
Deformierbares rohrförmiges Abdichtelement
Élément de joint tubulaire déformable

(30) Priority: 22.04.2010 GB 201006703
(43) Date of publication of application: 26.10.2011
(73) Proprietor: Tekmar Energy Limited, Newton Aycliffe, Durham DL5 6AR (GB)
(72) Inventor: Ritchie-Bland, Gary, Richmond, North Yorkshire DL11 7TS (GB)
(74) Representative: Vinsome, Rex Martin

(56) References cited:
- EP-A1- 1 985 845
- WO-A2-02/090808
- DE-A1- 19 601 288
- GB-A- 2 463 940

## Description

The present invention relates to a deformable tubular seal member and relates particularly, but not exclusively, to a seal assembly for sealing an aperture in a body through which an elongate flexible member is arranged to pass. The invention also relates to a seal assembly for sealing an aperture in a support pillar of an offshore turbine generator. Furthermore, the invention relates to a method of installing an elongate flexible member in an aperture formed in a body.

Power is collected from offshore wind or tide driven generators by connecting together one or more cables to transfer electrical current to the shore. The turbines are mounted to support pillars which generally take the form of cylindrical piles driven into the sea bed. An aperture is formed in the pile to enable the cable to pass into the pile to be connected to the turbine.

However, tidal forces on the part of the cable that lies on the sea bed can cause damage because as the cable is moved around, the part of the cable that passes through the aperture contacts the edges of the aperture which can cause damage to the cable. It is also desirable to prevent the cable moving along its axis through the aperture and it is therefore desirable to seal the cable in the aperture. However, seal assemblies disposed in apertures of submerged support pillars are also prone to failure through exposure to the elements.

Examples of sealing assemblies of the prior art which demonstrate some of the problems set out above are disclosed in DE19601288A1, WO02/090808A2 and GB2463940A.

A preferred embodiment of the present invention seeks to overcome the above disadvantages of the prior art.

According to an aspect of the present invention, there is provided a seal assembly for sealing an aperture in a body through which an elongate flexible member is arranged to pass, the seal assembly comprising the features of claim 1.

According to another aspect of the present invention, there is provided a method of installing an elongate flexible member in an aperture formed in a body, the method comprising the steps of claim 14.

According to an aspect of the present invention, there is provided a deformable tubular seal member having a first end and a second end, wherein a portion of the deformable tubular seal member disposed between the first end and the second end has a lower hardness than portions of the first and second ends.

It has been found that this provides the advantage that when the seal member is expanded and used to seal an aperture, the composite hardness provided by having hard ends and a less hard central portion helps to prevent extrusion of parts of the seal that are unsupported by the aperture.

In a preferred embodiment, the deformable tubular seal member is formed from a single cast piece of polyurethane having variable hardness.

Portions of the first and second ends may have a Shore hardness of between 40 D to 75 D and at least part of the portion disposed between the first and second ends may have a Shore hardness of between 55 A to 95 A.

This configuration has been found to be particularly successful at preventing seal extrusion.

In a preferred embodiment, portions of the first and second ends have a Shore hardness of 60 D and at least part of the portion disposed between the first and second ends has a Shore hardness of 85 A.

This configuration has been found to be the most successful at preventing seal extrusion.

The deformable tubular seal member may be substantially cylindrical and an annular portion between the first and second ends may have a lower hardness than the other parts of the cylinder.

According to another aspect of the present invention, there is provided a seal assembly for sealing an aperture in a body through which an elongate flexible member is arranged to pass, the seal assembly comprising:
a deformable tubular seal member as defined above mounted at the first end to a first end member and mounted at the second end to a second end member, wherein the deformable tubular seal member defines at least one channel through which an elongate flexible member can be fed;
at least one tensioning member mounted to said first end member and being moveable relative to said second end member; and
tensioning means arranged to move at least one said tensioning member to pull said first end member towards said second end member to deform the deformable tubular seal member.

In a preferred embodiment, at least one said tensioning member is substantially flexible.

This provides the advantage of improving flexibility during seal installation and improving seal lifetime compared with use of solid tie rods.

At least one said tensioning member may be formed from wire rope.

In a preferred embodiment, the assembly further comprises ratcheting means adapted to permit movement of at least one said tensioning member relative to the ratcheting means in a first direction and prevent movement of at least one said tensioning member relative to the ratcheting means in a second direction.

This provides the advantage of preventing seal failure.

Said ratcheting means may comprise a thread formed on at least one said tensioning member and at least one ratcheting nut disposed on the thread.

Said tensioning means may comprise at least one hydraulic cylinder adapted to move at least one said tensioning member in response to an introduction of fluid into at least one said hydraulic cylinder.

The assembly may further comprise a stop member disposed adjacent the first or second end member, the stop member adapted to provide a mechanical stop during insertion of the seal assembly into an aperture.

The stop member may comprise a sleeve having a diameter larger than the diameter of the deformable tubular seal member, wherein the sleeve encloses the tensioning means. This provides the advantage of providing both a mechanical stop and protection for the internal components of the assembly.

In a preferred embodiment, the assembly further comprises latching means having at least one latch portion arranged to move outwardly from a body portion to provide a mechanical stop when the seal assembly is disposed in an aperture.

This provides the advantage of helping to prevent axial movement of the assembly.

According to a further aspect of the present invention, there is provided an assembly comprising an aperture formed in a body and a seal assembly as defined above mounted in the aperture.

The aperture may define an axis that is non-perpendicular to a plane defined by a surface of the body, and a deformed tubular seal member may extend on both sides of the aperture.

An angled hole in a support pillar is desirable because it follows the natural lie of the cable. Consequently, the use of the composite hardness seal provides the advantage of ensuring that the expanded seal extends on both sides of the aperture and helps to prevents extrusion of the seal in the unsupported areas either side of the aperture in a plate. The unsupported areas bulge either side of the plate and create a mechanical lock that prevents the assembly from being removed from the aperture under operational loads.

According to another aspect of the present invention there is provided a method of installing an elongate flexible member in an aperture formed in a body, the method comprising:
mounting a seal assembly as defined above to an elongate flexible member;
pulling the elongate flexible member through the aperture until the seal assembly is located in the aperture; and
operating the tensioning means to deform the deformable tubular seal member to seal the seal assembly in the aperture.

A preferred embodiment of the invention will now be described by way of example only and not in any limitative sense, with reference to the accompanying drawings in which:
Figure 1 is a perspective view of a deformable tubular seal member embodying the present invention mounted in part of a seal assembly, wherein the seal assembly is shown in the deactivated condition;
Figure 2 is a partially cut away perspective view of a seal assembly embodying the present invention showing the seal assembly in the activated condition;
Figure 3 is a cross-sectional view of the seal assembly disposed in an angled aperture of a support pillar for an offshore turbine generator; and
Figure 4 is a cross-sectional view of a seal assembly and cable mounted in an angled aperture in a support pillar of an offshore turbine.

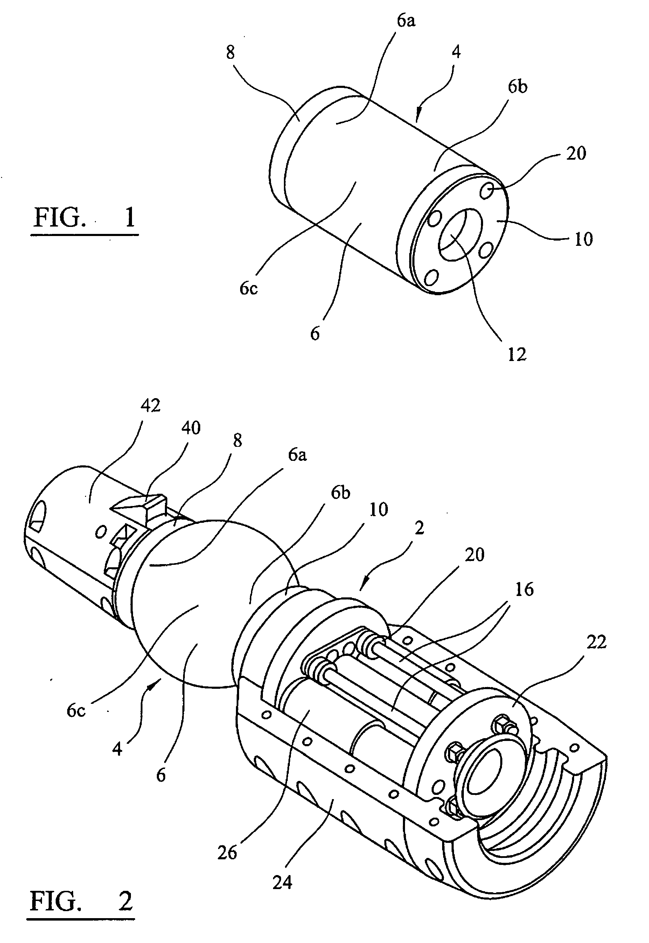

Referring to Figures 1 to 3, a seal assembly 2 comprises a sealing part 4 having a deformable tubular seal member 6. The deformable tubular seal member 6 has a first end 6a and a second end 6b. A central portion 6c of the deformable tubular seal member disposed between the first end 6a and the second end 6b has a lower hardness than portions of the first and second ends 6a, 6b to form a seal of composite hardness. Hardness is measured for example on a Shore hardness scale.

Preferably, the deformable tubular seal member 6 is formed from a single cast piece of polyurethane having variable hardness. This could be accomplished by pouring two or more types of molten polyurethane during casting. At least part of the first end 6a and second end 6b may have a Shore hardness of between 40 D to 75 D and at least part of the central portion 6c may have a Shore hardness of between 55 A to 95 A. Preferably, at least part of the first end 6a and second end 6b may have a Shore hardness of 60 D and at least part of the central portion 6c may have a Shore hardness of 85 A. It has been found that this helps prevent extrusion of the seal in unsupported areas.

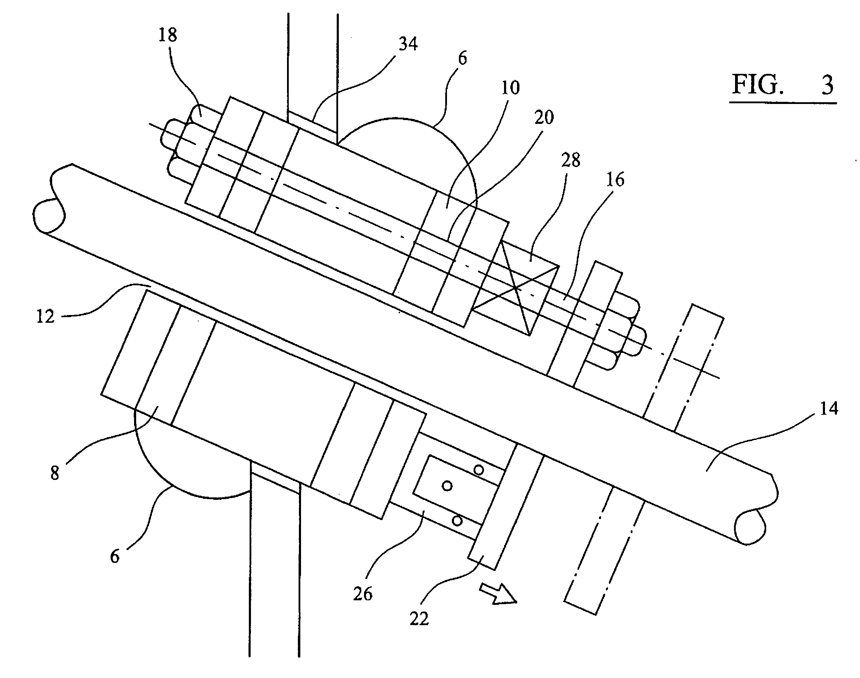

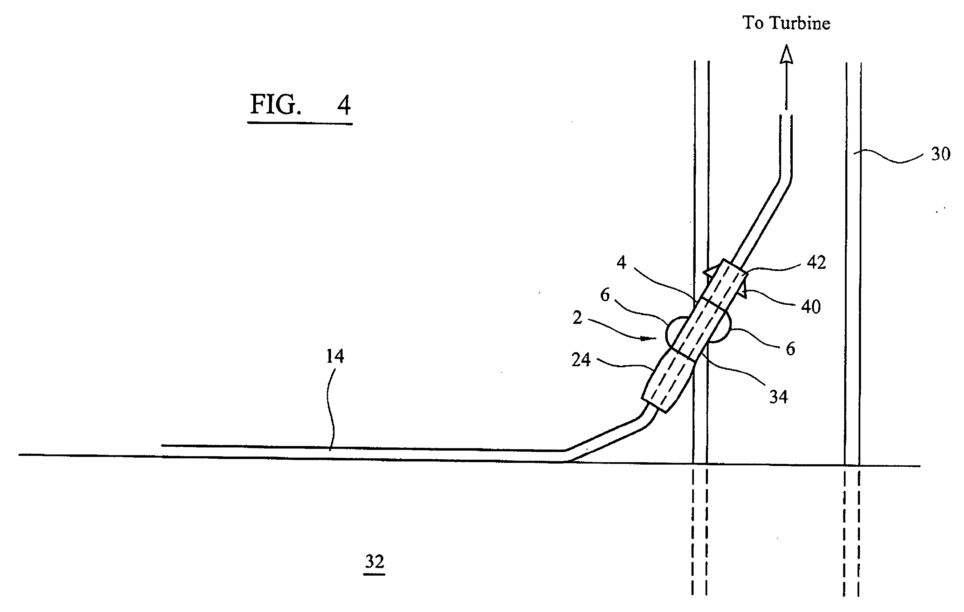

Deformable tubular seal portion 6 is preferably cylindrical, although other tubular configurations are possible. The portion of lower hardness may form an annulus at a central location along the longitudinal axis of the tube. Deformable tubular seal portion 6 is mounted between a first end member 8 and a second end member 10, which are both formed from annular plates. The seal assembly 2 defines a channel 12 through which an elongate flexible member such as an electrical cable 14 (Figures 3 and 4) can be fed.

At least one tensioning member 16 is provided. Preferably, a plurality of tensioning members is provided. Each tensioning member is preferably a flexible tie rod 16 which may be formed from stainless steel. A thread (not shown) is formed on the outer surface of each flexible tie rod 16. Flexible tie rods 16 are interconnected via bolts 18 to the first end member 8. A plurality of apertures 20 is formed through the second end member 10 which also takes the form of an annular plate. Flexible tie rods 16 are able to pass through and slide in apertures 20. The opposite ends of flexible tie rods 16 are interconnected to a movable plate 22 disposed in a stop member 24. The stop member takes the form of an oversize sleeve 24. A tensioning means is provided in the oversize sleeve 24 and takes the form of at least one hydraulic cylinder 26.

Ratcheting means is provided to permit movement of at least one tensioning member 16 relative to the ratcheting means in a first direction, and prevent movement of the tensioning member relative to the ratcheting means in the second direction. To accomplish this, a ratcheting nut 28 is threaded on to at least one of the flexible tie rods 16. Consequently, when the tie rods are moved by the tensioning means to expand the deformable tubular seal portion 6, the ratcheting nut 28 prevents movement of the tie rod in the second direction to prevent the seal portion 6 from collapsing.

As an alternative, wire rope may be used as flexible tie rods 16. The flexible wire ropes are formed with crimped machined ends which are threaded in order to maintain tension on the wires when engaging the hydraulic cylinders 26, thus compressing the end plates and activating the composite seal.

Latching means comprises a latch finger housing 42 which is mounted to first end member 8. At least one, and preferably four latch portions or spring loaded fingers 40 are mounted in the housing 42. When outwardly deployed, the latch fingers 40 act as a mechanical stop and failsafe to help prevent the seal assembly 2 from being pulled out of an aperture and prevent any movement along the axis of a cable.

Operation of the seal assembly will now described with reference to Figures 1 to 4.

An offshore turbine (not shown) is mounted to a support pillar 30 which is sunk into the sea bed 32. An angled aperture 34 is formed in the support pillar 30. The angled aperture defines an axis that is non-perpendicular to a plane defined by the outer surface of support pillar 30. In order to attach cable 14 to the turbine, the cable 14 is fed through seal assembly 2 and the cable 14 is then pulled into the support pillar 30 in a manner that will be familiar to the person skilled in the art.

Cable 14 is pulled into the support pillar 30 to the extent to which seal part 4 sits in angled aperture 34. Oversize sleeve 24 acts as a mechanical stop to prevent the seal assembly 2 being pulled through aperture 34.

In order to deform and expand the deformable tubular seal member 6, hydraulic fluid is fed into hydraulic cylinder 26 which pushes movable plate 22 to its furthest extent away from second plate 10. Tie rods 16 pull on first member 8 and slide through apertures 20 to pull the first end member towards the second end member 10 and expand tubular seal portion 6. This means that tubular seal portion 6 expands outwardly on both sides of aperture 34 as shown in Figures 3 and 4 to seal the aperture 34. The composite hardness of the seal member 6 helps prevent extrusion from the aperture 34.

Latching fingers 40 can then be deployed from a latch housing 42. Consequently, the seal assembly 2 is prevented from being pulled out of aperture 34 by the oversize sleeve 24 at one end, the latching mechanism 42 at the other end and the composite hardness of tubular member 6.

It will be appreciated by persons skilled in the art that the above embodiment has been described by way of example only, and not in any limitative sense, and that various alterations and modifications are possible without departure from the scope of the invention as defined by the appended claims.

## Claims

1. A seal assembly (2) for sealing an aperture in a body through which an elongate flexible member (14) is arranged to pass, the seal assembly comprising:
a deformable tubular seal member (6) having a first end (6a) and a second end (6b), wherein a portion (6c) of the deformable tubular seal member disposed between the first end and the second end has a lower hardness than portions of the first and second ends, the seal member mounted at the first end to a first end member (8) and mounted at the second end to a second end member (10), wherein the deformable tubular seal member defines at least one channel (12) through which an elongate flexible member (14) can be fed;
at least one tensioning member (16) mounted to said first end member and being moveable relative to said second end member; and
tensioning means (26) arranged to move at least one said tensioning member to pull said first end member towards said second end member to deform the deformable tubular seal member; and
**characterised by** ratcheting means (28) adapted to permit movement of at least one said tensioning member relative to the ratcheting means in a first direction and prevent movement of at least one said tensioning member relative to the ratcheting means in a second direction.

2. An assembly according to claim 1, wherein the deformable tubular seal member is formed from a single cast piece of polyurethane having variable hardness.

3. An assembly according to claim 1 or 2, wherein portions of the first and second ends have a Shore hardness of between 40 D to 75 D and at least part of the portion disposed between the first and second ends has a Shore hardness of between 55 A to 95 A.

4. An assembly according to claim 3, wherein portions of the first and second ends have a Shore hardness of 60 D and at least part of the portion disposed between the first and second ends has a Shore hardness of 85 A.

5. An assembly according to any one of the preceding claims, wherein the deformable tubular seal member is substantially cylindrical and an annular portion between the first and second ends has a lower hardness than the other parts of the cylinder.

6. An assembly according to any one of the preceding claims, wherein at least one said tensioning member is substantially flexible.

7. An assembly according to claim 6, wherein at least one said tensioning member is formed from wire rope.

8. An assembly according to any one of the preceding claims, including one or more of the following features:
(i) wherein said tensioning means comprises at least one hydraulic cylinder adapted to move at least one said tensioning member in response to an introduction of fluid into at least one said hydraulic cylinder; or
(ii) further comprising a stop member (24) disposed adjacent the first or second end member, the stop member adapted to provide a mechanical stop during insertion of the seal assembly into an aperture.

9. An assembly according to claim 1, wherein said ratcheting means comprises a thread formed on at least one said tensioning member and at least one ratcheting nut (28) disposed on the thread.

10. An assembly according to claim 8, wherein the stop member comprises a sleeve having a diameter larger than the diameter of the deformable tubular seal member, wherein the sleeve encloses the tensioning means.

11. An assembly according to any one of the preceding claims, further comprising latching means (40) having at least one latch portion (42) arranged to move outwardly from a body portion to provide a mechanical stop when the seal assembly is disposed in an aperture.

12. An assembly comprising an aperture formed in a body and a seal assembly according to any one of the preceding claims mounted in the aperture.

13. An assembly according to claim 12, wherein the aperture defines an axis that is non-perpendicular to a plane defined by a surface of the body through which the aperture is formed, and a deformed tubular seal member extends on both sides of the aperture.

14. A method of installing an elongate flexible member in an aperture formed in a body, the method comprising:
mounting a seal assembly according to any one of claims 1 to 11 to an elongate flexible member;
pulling the elongate flexible member through the aperture until the seal assembly is located in the aperture; and
operating the tensioning means to deform the deformable tubular seal member to seal the seal assembly in the aperture.

## Patentansprüche

1. Dichtungsanordnung (2) zum Abdichten einer Öffnung in einem Körper, durch die ein längliches flexibles Element (14) verlaufen soll, wobei die Dichtungsanordnung Folgendes umfasst:
ein verformbares rohrförmiges Dichtungselement (6) mit einem ersten Ende (6a) und einem zweiten Ende (6b), wobei ein zwischen dem ersten und dem zweiten Ende angeordneter Teil (6c) des verformbaren rohrförmigen Dichtungselements eine geringere Härte hat als Teile des ersten und des zweiten Endes, wobei das Dichtungselement am ersten Ende an einem ersten Endelement (8) angebracht ist und am zweiten Ende an einem zweiten Endelement (10) angebracht ist, wobei das verformbare rohrförmige Dichtungselement wenigstens einen Kanal (12) definiert, durch welchen ein längliches flexibles Element (14) hindurchgeführt werden kann,
wenigstens ein Spannelement (16), das an dem genannten ersten Endelement angebracht ist und relativ zu dem genannten zweiten Endelement bewegbar ist, und
eine Spanneinrichtung (26), die angeordnet ist, um wenigstens ein genanntes Spannelement (16) zu bewegen, um das genannte erste Endelement in Richtung auf das genannte zweite Endelement zu ziehen, um das verformbare rohrförmige Dichtungselement zu verformen, und
**gekennzeichnet durch** ein Gesperre (28), das dafür ausgelegt ist, die Bewegung des wenigstens einen genannten Spannelements relativ zu dem Gesperre in einer ersten Richtung zuzulassen und die Bewegung des wenigstens einen genannten Spannelements relativ zum Gesperre in einer zweiten Richtung zu verhindern.

2. Anordnung nach Anspruch 1, wobei das verformbare rohrförmige Dichtungselement aus einem einzelnen Polyurethangussstück mit unterschiedlicher Härte hergestellt ist.

3. Anordnung nach Anspruch 1 oder 2, wobei Teile des ersten und des zweiten Endes eine Shore-D-Härte zwischen 40 und 75 haben und wenigstens ein Stück des zwischen dem ersten und dem zweiten Ende angeordneten Teils eine Shore-A-Härte zwischen 55 und 95 hat.

4. Anordnung nach Anspruch 3, wobei Teile des ersten und des zweiten Endes eine Shore-D-Härte von 60 haben und wenigstens ein Stück des zwischen dem ersten und dem zweiten Ende angeordneten Teils eine Shore-A-Härte von 85 hat.

5. Anordnung nach einem der vorhergehenden Ansprüche, wobei das verformbare rohrförmige Dichtungselement im Wesentlichen zylindrisch ist und ein ringförmiger Teil zwischen dem ersten und dem zweiten Ende eine niedrigere Härte als die anderen Teile des Zylinders hat.

6. Anordnung nach einem der vorhergehenden Ansprüche, wobei wenigstens ein genanntes Spannelement im Wesentlichen flexibel ist.

7. Anordnung nach Anspruch 6, wobei wenigstens ein genanntes Spannelement aus Drahtseil hergestellt ist.

8. Anordnung nach einem der vorhergehenden Ansprüche mit einem oder mehreren der folgenden Merkmale:
i) wobei das genannte Spannmittel wenigstens einen hydraulischen Zylinder aufweist, der dafür ausgelegt ist, sich als Reaktion auf eine Einführung von Fluid in den wenigstens einen genannten hydraulischen Zylinder zu bewegen, oder
ii) das ferner ein Anschlagelement (24) aufweist, das neben dem ersten oder dem zweiten Endelement angeordnet ist, wobei das Anschlagelement dafür ausgelegt ist, während der Einführung der Dichtungsanordnung in eine Öffnung einen mechanischen Anschlag bereitzustellen.

9. Anordnung nach Anspruch 1, wobei das genannte Gesperre ein an wenigstens einem genannten Spannelement ausgebildetes Gewinde und wenigstens eine auf dem Gewinde angeordnete Sperrmutter (28) aufweist.

10. Anordnung nach Anspruch 8, wobei das Anschlagelement eine Hülse mit einem Durchmesser umfasst, der größer ist als der Durchmesser des verformbaren rohrförmigen Dichtungselements, wobei die Hülse die Spanneinrichtung umschließt.

11. Anordnung nach einem der vorhergehenden Ansprüche, die ferner ein Sperrmittel (40) aufweist, das wenigstens einen Sperrteil (42) hat, der zum Bewegen von einem Körperstück nach außen angeordnet ist, um einen mechanischen Anschlag bereitzustellen, wenn die Dichtungsanordnung in einer Öfnung angeordnet ist.

12. Anordnung, die eine in einem Körper ausgebildete Öffnung und eine in der Öffnung angebrachte Dichtungsanordnung nach einem der vorhergehenden Ansprüche umfasst.

13. Anordnung nach Anspruch 12, wobei die Öffnung eine Achse definiert, die zu einer Ebene, die von einer Oberfläche des Körpers, durch welche die Öffnung ausgebildet ist, definiert wird, nicht lotrecht ist, und sich auf beiden Seiten der Öffnung ein verformtes rohrförmiges Dichtungselement erstreckt.

14. Verfahren zum Einbauen eines länglichen flexiblen Elements in eine in einem Körper ausgebildete Öffnung, wobei das Verfahren Folgendes umfasst:
Anbringen einer Dichtungsanordnung nach einem der Ansprüche 1 bis 11 auf einem länglichen flexiblen Element,
Durchziehen des länglichen flexiblen Elements durch die Öffnung, bis die Dichtungsanordnung in der Öffnung sitzt, und
Bedienen der Spanneinrichtung, um das verformbare rohrförmige Dichtungselement zum Abdichten der Dichtungsanordnung in der Öffnung zu verformen.

## Revendications

1. Ensemble de joint (2) pour sceller une ouverture dans un corps à travers lequel un élément flexible allongé (14) est disposé pour le traverser, l'ensemble de joint comprenant :
un élément de joint tubulaire déformable (6) ayant une première extrémité (6a) et une seconde extrémité (6b), où une partie (6c) de l'élément de joint tubulaire déformable disposée entre la première extrémité et la seconde extrémité a une dureté inférieure aux parties des première et seconde extrémités,
l'élément de joint étant monté à la première extrémité sur un premier élément d'extrémité (8) et monté à la seconde extrémité sur un second élément d'extrémité (10), où l'élément de joint tubulaire déformable définit au moins un canal (12) à travers lequel un élément flexible allongé (14) peut être amené ;
au moins un élément de tension (16) monté sur ledit premier élément d'extrémité et étant mobile par rapport au second élément d'extrémité ; et
un moyen de tension (26) disposé afin de déplacer au moins un dit élément de tension pour tirer ledit premier élément d'extrémité vers ledit second élément d'extrémité afin de déformer l'élément de joint tubulaire déformable ; et
**caractérisé par** un moyen d'encliquetage (28) adapté pour permettre le mouvement d'au moins un dit élément de tension par rapport au moyen d'encliquetage dans une première direction et empêcher le mouvement d'au moins un dit élément de tension par rapport au moyen d'encliquetage dans une seconde direction.

2. Ensemble selon la revendication 1, où l'élément de joint tubulaire déformable est formé à partir d'une seule pièce moulée de polyuréthanne ayant une dureté variable.

3. Ensemble selon la revendication 1 ou 2, où des parties des première et seconde extrémités ont une dureté Shore entre 40 D et 75 D et au moins une partie de la partie disposée entre les première et seconde extrémités a une dureté Shore entre 55 A et 95 A.

4. Ensemble selon la revendication 3, où des parties des première et seconde extrémités ont une dureté Shore de 60 D et au moins une partie de la partie disposée entre les première et seconde extrémités a une dureté Shore de 85 A.

5. Ensemble selon une quelconque des revendications précédentes, où l'élément de joint tubulaire déformable est substantiellement cylindrique et une partie annulaire entre les première et seconde extrémités a une dureté inférieure aux autres parties du cylindre.

6. Ensemble selon une quelconque des revendications précédentes, où au moins un dit élément de tension est substantiellement flexible.

7. Ensemble selon la revendication 6, où au moins un dit élément de tension est formé à partir d'un câble métallique.

8. Ensemble selon une quelconque des revendications précédentes, incluant une ou plusieurs des caractéristiques suivantes :
(i) où ledit moyen de tension comprend au moins un cylindre hydraulique adapté pour déplacer au moins un dit élément de tension en réponse à une introduction de fluide dans au moins un dit cylindre hydraulique ; ou
(ii) comprenant en outre un élément de butée (24) disposé à côté du premier ou second élément d'extrémité, l'élément de butée étant adapté pour fournir une butée mécanique lors de l'insertion de l'ensemble de joint dans une ouverture.

9. Ensemble selon la revendication 1, où ledit moyen d'encliquetage comprend un filetage formé sur au moins un dit élément de tension et au moins un écrou d'encliquetage (28) disposé sur le filetage.

10. Ensemble selon la revendication 8, où l'élément de butée comprend un manchon ayant un diamètre supérieur au diamètre de l'élément de joint tubulaire déformable, où le manchon renferme le moyen de tension.

11. Ensemble selon une quelconque des revendications précédentes, comprenant en outre un moyen de verrouillage (40) ayant au moins une partie de verrou (42) disposée pour se déplacer vers l'extérieur à partir d'une partie du corps afin de fournir une butée mécanique lorsque l'ensemble de joint est disposé dans une ouverture.

12. Ensemble comprenant une ouverture formée dans un corps et un ensemble de joint selon une quelconque des revendications précédentes monté dans l'ouverture.

13. Ensemble selon la revendication 12, où l'ouverture définit un axe qui est non-perpendiculaire à un plan défini par une surface du corps à travers lequel l'ouverture est formée, et un élément de joint tubulaire déformé s'étend des deux côtés de l'ouverture.

14. Procédé pour installer un élément flexible allongé dans ouverture formée dans un corps, le procédé consistant à :
monter un ensemble de joint selon une quelconque des revendications 1 à 11 sur un élément flexible allongé ;
tirer l'élément flexible allongé à travers l'ouverture jusqu'à ce que l'ensemble de joint se situe dans l'ouverture ; et
faire fonctionner le moyen de tension pour déformer l'élément de joint tubulaire déformable afin de sceller l'ensemble de joint dans l'ouverture.
